# EUROPEAN PATENT SPECIFICATION

(11) **EP 1 953 212 B1**
(45) Date of publication and mention of the grant of the patent: **27.05.2015**
(21) Application number: 06832846.7
(22) Date of filing: 17.11.2006
(51) Int. Cl.: C10M 169/02, B62D 5/04, F16H 57/04, C10M 115/10, C10M 117/02, C10M 149/14, C10N 10/02, C10N 10/04, C10N 20/00, C10N 20/06, C10N 30/00, C10M 123/02, C10M 123/06

(54) **LUBRICANT COMPOSITION, REDUCTION GEAR USING THE COMPOSITION, AND ELECTRIC POWER STEERING DEVICE USING THE REDUCTION GEAR**
SCHMIERSTOFFZUSAMMENSETZUNG, UNTERSETZUNGSGETRIEBE UNTER VERWENDUNG DER ZUSAMMENSETZUNG UND ELEKTRISCHE SERVOLENKUNGSVORRICHTUNG UNTER VERWENDUNG DES UNTERSETZUNGSGETRIEBES
COMPOSITION LUBRIFIANTE, ENGRENAGE RÉDUCTEUR UTILISANT LA COMPOSITION ET DISPOSITIF DE DIRECTION A ASSISTANCE ELECTRIQUE UTILISANT L'ENGRENAGE REDUCTEUR

(30) Priority: 25.11.2005 JP 2005340579
(43) Date of publication of application: 06.08.2008
(73) Proprietor: JTEKT Corporation, Osaka-shi Osaka 542-8502 (JP)
(72) Inventor: KITAHATA, Kouji, c/o JTEKT Corporation, Osaka-shi, Osaka 542-8502 (JP); KASAHARA, Fumiaki, c/o JTEKT Corporation, Osaka-shi, Osaka 542-8502 (JP); SHIRAI, Yoshimasa, c/o JTEKT Corporation, Osaka-shi, Osaka 542-8502 (JP)
(74) Representative: Steil, Christian
(86) International application number: PCT/JP2006/322967
(87) International publication number: WO 2007/060885

(56) References cited:
- EP-A1- 1 544 280
- WO-A1-2005/090529
- WO-A1-2005/090529
- JP-A- 01 271 493
- JP-A- 11 152 490
- JP-A- 11 228 983
- JP-A- 53 042 203
- US-A- 5 364 544

## Description

### TECHNICAL FIELD

The present invention relates to a lubricant composition, a speed reduction gear filled with the lubricant composition, and an electric power steering apparatus including the speed reduction gear.

### BACKGROUND ART

Electric power steering apparatuses for automobiles employ a speed reduction gear. In a column-type EPS, for example, the speed reduction gear transmits rotation of an electric motor from a small gear such as a worm to a large gear such as a worm wheel for reduction of a rotation speed and amplification of an output, and then applies the output to a steering shaft for torque assist of a steering operation. Proper backlash is required for engagement between the small gear and the large gear. However, if the backlash is excessively great, rattling sound occurs due to the backlash, for example, when the rotation of the gears is reversed or when a reaction force is inputted from tires during traveling on a bad road such as a stone pavement. If the rattling sound is transmitted as a noise to an automobile compartment, a driver has an uncomfortable feeling.

Therefore, a so-called by-layer assembly is conventionally employed in which a speed reduction gear is assembled by selecting a combination of a small gear and a large gear to provide proper backlash. However, the by-layer assembly is time-consuming, thereby failing to improve productivity in manufacturing the speed reduction gear. Further, even the by-layer assembly fails to eliminate variations in steering torque occurring due to off-center of a shaft of the worm wheel. Not only the speed reduction gear for the electric power steering apparatus but also a common speed reduction gear having a small gear and a large gear suffer from these problems.

To solve these problems, Patent Document 1 proposes a speed reduction gear for an electric power steering apparatus in which a worm shaft is displaceable toward a worm wheel, and backlash between the worm shaft and the worm wheel is virtually eliminated by resiliently displacing the worm shaft toward the worm wheel by a spring or the like. However, this arrangement complicates the construction of the speed reduction gear, thereby increasing production costs.

For reduction of the rattling sound without any modification in the construction of the speed reduction gear, it is proposed that a region of the speed reduction gear including at least an engaging portion of the small gear and the large gear is filled with a lubricant composition containing minute particles. For example, as described in Patent Documents 2 and 3, the aforementioned region is filled with a lubricant composition containing buffer particles of an elastic rubber or soft resin as the minute particles. The buffer particles are present between tooth faces of the gears to serve as a buffer material to reduce the rattling sound.

Further, as described in Patent Document 4, a region of a speed reduction gear including an engaging portion of a small gear and a large gear each having tooth faces of a metal is filled with a lubricant composition containing soft metal particles of another metal softer than the metal of the tooth faces as the minute particles. The soft metal particles are crushed by engagement between the small gear and the large gear to adhere in the form of films to the tooth faces of the gears to provide proper backlash between the gears, thereby reducing the rattling sound.

Further, as described in Patent Document 5, a region of a speed reduction gear including an engaging portion of a small gear and a large gear, one of which has tooth faces of a resin and the other of which has tooth faces of a metal, is filled with lubricant composition containing minute particles composed of a material softer than the metal and harder than the resin. When the speed reduction gear is operated, the minute particles partly bite into the softer resin tooth faces by an inputted force to form a multiplicity of projections on the tooth faces to provide proper backlash between the gears, thereby reducing the rattling sound.
Patent Document 1: JP-A1-2000-43739 (Paragraphs 0007 to 0009 and Fig. 1)
Patent Document 2: JP-A1-2003-214529 (Claim 1 and Paragraphs 0005 to 0006)
Patent Document 3: JP-A1-2004-162018 (Claim 1 and Paragraph 0009)
Patent Document 4: JP-A1-2004-143263 (Claim 1 and Paragraph 0006)
Patent Document 5: JP-A1-2004-204044 (Claim 1 and Paragraphs 0006 to 0007)
Patent Document 6: JP 11 228983 A, shows a lubricant composition according to the preamble of claim 1.
Patent document 7: EP 1 734 102, discloses a lubricating grease composition for an electric power steering apparatus, that contains lubricating base oil, calcium sulfonate thickening agent and micro particles. The grease has low oil separation and provides low noise.

### DISCLOSURE OF THE INVENTION

### PROBLEMS TO BE SOLVED BY THE INVENTION

Grease is generally used as a lubricant for the speed reduction gears. Therefore, the lubricant compositions containing any of the aforementioned minute particles are each typically used in a grease form by addition of a thickener. In the greasy lubricant compositions each containing the minute particles, a lubricant base oil is generally blended in a greater amount than in the ordinary grease to improve the fluidity of the compositions for smoothly introducing the minute particles into the engaging portion of the small gear and the large gear. Thus, the consistency of the grease which is an index of the hardness of the grease is set at a higher level than -that of the ordinary grease (the grease is softened).

However, where the amount of the blended lubricant base oil is increased, the lubricant base oil is more liable to be separated from the lubricant composition, and the separated lubricant base oil is more liable to leak from the speed reduction gear. This problem also occurs in the case of a greasy lubricant composition containing no minute particles and having a higher consistency. For example, a calcium sulfonate thickener which has an excellent lubricant base oil retaining capability is generally employed as the thickener for a greasy lubricant composition having a higher consistency with a worked penetration of not less than 355 as determined at 25°C in conformity with JIS K2220:2003 "Grease" specified by Japanese Industrial Standards, whether or not the lubricant composition contains minute particles.

However, studies conducted by the inventor have revealed that the consistency of the lubricant composition containing the calcium sulfonate thickener is increased due to gradual degradation of the lubricant base oil retaining capability of the thickener to result in the oil separation and the oil leakage if a stress is repeatedly applied to the lubricant composition over a long period of time, for example, by repeatedly operating the speed reduction gear filled with the lubricant composition.

It is an object of the present invention to provide a novel lubricant composition which is free from an increase in consistency, separation of its lubricant base oil and leakage of the separated lubricant base oil from a speed reduction gear or the like even if a stress is repeatedly applied to the composition over a long period of time. It is another object of the present invention to provide a speed reduction gear which employs the lubricant composition containing minute particles to permit noise reduction and is free from separation and leakage of the lubricant base oil, and to provide an electric power steering apparatus employing the speed reduction gear.

### MEANS FOR SOLVING THE PROBLEMS

The present invention provides a lubricant composition, which has a worked penetration of not less than 355 (at 25°C) and comprises a lubricant base oil and a thickener, wherein the thickener comprises at least two types of the thickeners including at least lithium stearate. Further, the content of lithium stearate is not less than 0.5 mass% based on the total of the lubricant composition in order to provide the effect of preventing the oil separation and the oil leakage which may otherwise occur due to the increase in the consistency of the lubricant composition when a stress is repeatedly applied to the lubricant composition over a long period of time and the effect of improving the lubricity of the lubricant composition. Further, the content of lithium stearate is not greater than 3 mass% based on the total of the lubricant composition in order to prevent reduction in the worked penetration of the lubricant composition (at 25 °C) to less than 355 which may otherwise occur due to an excessively high lubricant base oil retaining capability exhibited by lithium stearate when a stress is repeatedly applied over a long period of time.

In the present invention, lithium stearate has virtually no lubricant base oil retaining capability at the initial stage before the lubricant composition is filled in a speed reduction gear. However, when a stress is repeatedly applied to the lubricant composition filled in the speed reduction gear, for example, by repeatedly operating the speed reduction gear, lithium stearate gradually exhibits its lubricant base oil retaining capability. Although the lubricant base oil retaining capability of the other thickener such as a calcium sulfonate thickener employed in combination with lithium stearate is gradually reduced due to the application of the stress as described above, lithium stearate compensates for the gradual reduction in the lubricant base oil retaining capability. This prevents the increase in the consistency of the lubricant composition and hence the separation of the lubricant base oil and the leakage of the separated lubricant base oil from the speed reduction gear when the stress is repeatedly applied to the lubricant composition over a long period of time.

According to the present invention, the lubricant composition has a relatively high consistency with a worked penetration of not less than 355 (at 25°C) at the initial stage before the lubricant composition is filled in the speed reduction gear, but the consistency does not increase from the initial level even if a stress is repeatedly applied to the lubricant composition over a long period of time. Therefore, the lubricant composition of the present invention is free from the oil separation and the oil leakage. Further, lithium stearate serves to improve the lubricity of the lubricant composition. This prevents a temperature increase due to friction when the speed reduction gear is repeatedly operated with the inventive lubricant composition.

For use, the lubricant composition of the present invention may be filled in a gear engaging portion, and further comprise any of the aforementioned various types of minute particles which are to be present in the gear engaging portion to serve for noise reduction. In this case, when the lubricant composition is employed for the speed reduction gear, for example, the lubricant composition reduces noise occurring in an automobile compartment due to rattling sound caused between a small gear and a large gear of the speed reduction gear.

A calcium sulfonate thickener is preferred as the other thickener to be employed in combination with lithium stearate. The calcium sulfonate thickener has an excellent lubricant base oil retaining capability in the lubricant composition having a higher consistency with a worked penetration of not less than 355 (at 25 °C) at the initial stage before the lubricant composition is filled in the speed reduction gear and, therefore, is capable of retaining the lubricant base oil until lithium stearate sufficiently exhibits its lubricant base oil retaining capability after the start of the use of the lubricant composition filled in the speed reduction gear, thereby advantageously preventing the oil separation and the oil leakage.

A speed reduction gear of the present invention comprises a small gear and a large gear, wherein a region including an engaging portion of the both gears is filled with the lubricant composition of the present invention containing the minute particles. Therefore, the speed reduction gear is advantageous in that noise such as rattling sound occurring due to backlash is reduced and the separation and the leakage of the lubricant base oil do not occur. Further, an inventive electric power steering apparatus is configured to transmit an output of an electric motor for steering assist to a steering mechanism by reducing its speed through the speed reduction gear and, therefore, is advantageous in that noise in the automobile compartment can be reduced at lower costs.

### EFFECTS OF THE INVENTION

According to the present invention, the novel lubricant composition is provided which is free from the separation of the lubricant base oil and the leakage of the separated lubricant base oil from the speed reduction gear which may otherwise occur due to the increase in the consistency of the lubricant composition when a stress is repeatedly applied to the lubricant composition over a long period of time. According to the present invention, the use of the lubricant composition of the present invention containing the minute particles makes it possible to provide the speed reduction gear which is free from the separation and the leakage of the lubricant base oil with reduced noise, and to provide the electric power steering apparatus employing the speed reduction gear.

### BRIEF DESCRIPTION OF THE DRAWINGS

Fig. 1 is a schematic sectional view of an electric power steering apparatus according to one embodiment of the present invention.
Fig. 2 is a sectional view taken along a line II-II in Fig. 1.

### DESCRIPTION OF REFERENCE CHARACTERS

- A:: An engaging portion
- M:: Motor
- 11:: Worm shaft (small gear)
- 12:: Worm wheel (large gear)
- 50:: Speed reduction gear

### EMBODIMENTS OF THE INVENTION

### <Lubricant Composition>

A lubricant composition of the present invention has a worked penetration of not less than 355 (at 25°C) and contains a lubricant base oil and a thickener, wherein the thickener comprises at least two types of thickeners including at least lithium stearate, characterized in that a content of lithium stearate is 0.5 mass% to 3 mass% based on the total of the lubricant composition. Where the lubricant composition of the present invention is used for a speed reduction gear, for example, the lubricant composition preferably contains minute particles for reduction of noise in an automobile compartment occurring due to rattling sound caused between a small gear and a large gear of the speed reduction gear.

The term "worked penetration" to be used in the present invention is defined as a worked penetration at a measurement temperature of 25°C specified in JIS K2200:2003 "Lubricating Grease" by Japanese Industrial Standards. The worked penetration (at 25°C) is limited to not less than 355. This is based on the fact that a harder lubricant composition containing a smaller amount of a lubricant base oil and having a worked penetration (at 25°C) of less than 355 is substantially free from the separation of the lubricant base oil and the leakage of the separated lubricant base oil from a speed reduction gear filled with the lubricant composition, even if a stress is repeatedly applied to the lubricant composition over a long period of time by repeatedly operating the speed reduction gear. An upper limit of the worked penetration (at 25°C) is not particularly limited, but may range up to 475 which is an upper limit value specified in JIS K2220. Particularly, the upper limit is preferably not greater than 430 for more reliably preventing the separation of the lubricant base oil and the leakage of the separated lubricant base oil.

### (Lubricant Base Oil)

A synthetic hydrocarbon oil (e.g., poly(a-olefin) oil) is preferably used as the lubricant base oil, but a mineral oil, or a synthetic oil such as a silicone oil, a fluorinated oil, an ester oil or an ether oil may be used. The lubricant base oil preferably has a dynamic viscosity of 5 to 200 mm²/s (at 40°C), particularly preferably 20 to 100 mm²/s (at 40°C).

### (Thickener)

In the present invention, as described above, at least two types of thickeners including lithium stearate are used in combination as the thickener. As described above, the combinational use of the at least two thickeners including lithium stearate as the thickener prevents the oil separation and the oil leakage which may otherwise occur due to the increase in the consistency of the lubricant composition when a stress is repeatedly applied to the lubricant composition over a long period of time, and improves the lubricity of the lubricant composition to prevent the temperature increase due to friction when the speed reduction gear is repeatedly operated.

The content of lithium stearate is 0.5 to 3 mass% based on the total of the lubricant composition. If the content is less than the aforementioned range, lithium stearate will fail to sufficiently provide the effect of preventing the oil separation and the oil leakage which may otherwise occur due to the increase in the consistency of the lubricant composition by the repeated application of the stress for a long period of time and the effect of improving the lubricity of the lubricant composition. If the content is greater than the aforementioned range, the lubricant base oil retaining capability of lithium stearate will be excessively increased by the repeated application of the stress over a long period of time, so that the worked penetration of the lubricant composition is liable to be reduced to less than 355 (at 25°C).

In order to further improve the effect of preventing the oil separation and the oil leakage which may otherwise occur due to the increase in the consistency of the lubricant composition by the repeated application of the stress over a long period of time and the effect of improving the lubricity of the lubricant composition, the content of lithium stearate is particularly preferably not less than 1 mass% within the aforementioned range. In order to more reliably prevent the excessive increase in the lubricant base oil retaining capability of lithium stearate and hence the reduction in the worked penetration of the lubricant composition (at 25°C) to less than 355 which may otherwise occur due to the repeated application of the stress over a long period of time, the content of lithium stearate is particularly preferably not greater than 2 mass% within the aforementioned range.

Usable as the other thickener in combination with lithium stearate is any of various thickeners which each have an excellent lubricant base oil retaining capability in the lubricant composition having a higher consistency with a worked penetration of not less than 355 (at 25°C) at the initial stage before the lubricant composition is filled in the speed reduction gear to provide the effect of preventing the oil separation and the oil leakage by retaining the lubricant base oil until lithium stearate sufficiently exhibits its lubricant base oil retaining capability after the start of the use of the lubricant composition filled in the speed reduction gear. Particularly, a calcium sulfonate thickener is preferred. The calcium sulfonate thickener is present in the form of very small fibrous particles in the lubricant composition and, therefore, is particularly excellent in lubricant base oil retaining capability at the initial stage.

Examples of the calcium sulfonate thickener include thickeners prepared by blending calcium sulfonate as an essential component with at least one calcium salt selected from the group consisting of: (i) calcium carbonate; (ii) a higher fatty acid calcium salt such as calcium dibehenate, calcium distearate or calcium dihydroxystearate; (iii) a lower fatty acid calcium salt such as calcium acetate; and (iv) calcium borate.

The content of the calcium sulfonate thickener is preferably 0.3 to 10 mass% based on the total of the lubricant composition. If the content is less than the aforementioned range, the calcium sulfonate thickener will fail to sufficiently provide the effect of preventing the oil separation and the oil leakage by retaining the lubricant base oil until lithium stearate sufficiently exhibits its lubricant base oil retaining capability after the start of the use of the lubricant composition filled in the speed reduction gear. If the content is greater than the aforementioned range, the lubricant base oil retaining capability of the calcium sulfonate thickener will be excessively increased, so that the worked penetration of the lubricant composition is liable to be reduced to less than 355 (at 25°C) at the initial stage before the lubricant composition is filled in the speed reduction gear.

The content of the calcium sulfonate thickener is particularly preferably not less than 0.5 mass% within the aforementioned range in order to further improve the effect of preventing the oil separation and the oil leakage by retaining the lubricant base oil until lithium stearate sufficiently exhibits its lubricant base oil retaining capability. Further, the content of the calcium sulfonate thickener is particularly preferably not greater than 7 mass% within the aforementioned range in order to more reliably prevent, where the lubricant base oil retaining capability is excessively increased, the reduction in the worked penetration of the lubricant composition to be less than 355 (at 25°C) at the initial stage before the lubricant composition is filled in the speed reduction gear. A small amount of a metal soap thickener, an inorganic or organic non-soap thickener other than the aforementioned two types of thickeners may be used as the thickener, as long as the effects of the invention are not affected.

### (Minute Particles)

Usable as the minute particles are any of various types of minute particles which are capable of reducing the noise of the speed reduction gear when being present in an engaging portion of the small gear and the large gear. For example, the following three types of minute particles may be used depending on a combination of materials for the small gear and the large gear.
(1) Where one of the gears is composed of a resin and the other gear is composed of a metal, buffer particles are used.
(2) Similarly, where one of the gears is composed of a resin and the other gear is composed of a metal, minute particles composed of a material which is softer than metal tooth faces and harder than resin tooth faces are used.
(3) Where the gears are each composed of a metal, soft metal particles composed of a metal which is softer than metal tooth faces are used.

Various types of elastic rubbers and soft resins are usable as the buffer particles (1) which are capable of reducing the rattling sound when being present in the engaging portion of the small gear and the large gear to absorb impact on the tooth faces of the gears. Examples of the rubbers include ethylene-propylene copolymer rubbers (EPM), ethylene-propylene-diene copolymer rubbers (EPDM), silicone rubbers and urethane rubbers (U). Examples of the soft resins include polyolefin resins, polyamide resins, polyester resins, polyurethane resins, polyacetal resins, polyphenylene oxide resins, polyimide resins, fluorinated resins and thermosetting urethane resins. Other usable examples include oil-resistant thermoplastic elastomers include olefin elastomers, urethane elastomers, polyester elastomers, polyamide elastomers and fluorinated elastomers.

The buffer particles preferably have an average particle diameter D₁ of 50 µm < D₁ ≤ 300 µm. If the average particle diameter D₁ is not greater than 50 µm, the effect of reducing the rattling sound by absorbing impact caused by the engagement between the small gear and the large gear will be limited, making it impossible to significantly reduce the noise in the automobile compartment. If the average particle diameter D₁ is greater than 300 µm, the electric power steering apparatus is liable to suffer from an increase in steering torque and cause sliding sound. In order to further improve the effect of reducing the rattling sound, the average particle diameter of the buffer particles is particularly preferably not less than 100 µm within the aforementioned range. In order to more reliably prevent the increase in steering torque and the occurrence of the sliding sound, the average particle diameter is particularly preferably not greater than 200 µm within the aforementioned range.

The content of the buffer particles is preferably 5 to 50 mass% based on the total of the lubricant composition. If the content is less than the aforementioned range, the buffer particles will fail to sufficiently provide the effect of absorbing the impact in the engaging portion of the small gear and the large gear to reduce the rattling sound and hence reduce the noise in the automobile compartment. If the content is greater than the aforementioned range, the electric power steering apparatus is liable to suffer from an increase in steering torque and cause a sliding sound, thereby resulting in noise increase in the automobile compartment. In order to improve the effect of reducing the rattling sound, the content of the buffer particles is particularly preferably not less than 20 mass% within the aforementioned range. In order to more reliably prevent the increase in steering torque and the occurrence of the sliding sound, the content is particularly preferably not greater than 40 mass% within the aforementioned range.

The minute particles (2) partly bite into the softer resin tooth faces of the one of the small gear and the large gear by a force inputted when the speed reduction gear is operated, whereby the minute particles are fixed to the tooth faces as partly projecting from the tooth faces to form a multiplicity of projections on the tooth faces. These projections provide proper backlash to reduce the rattling sound, so that the noise in the automobile compartment is reduced. The minute particles may be composed of any of various organic and inorganic materials which are softer than the metal tooth faces and harder than the resin tooth faces. However, the minute particles are particularly preferably composed of a highly elastic and tough resin in order to prevent the projections from causing impact noise, damaging the metal tooth faces and being easily cracked or crushed when the projections of the minute particles collide with the metal tooth faces.

Where the resin tooth faces are composed of a (non-reinforced) polyamide resin, for example, which is a common material for resin gears, the minute particles may be composed of a resin which is harder than the polyamide resin and softer than the metal tooth faces. Specific examples of the resin include so-called engineering plastics such as polyphenylene sulfides (PPS) and polyetheretherketones (PEEK), and cured thermosetting resins. The hardness of the minute particles may be defined, for example, by Rockwell hardness.

The minute particles preferably have an average particle diameter of 10 to 200 µm. If the average particle diameter is less than the aforementioned range, the projections formed on the resin tooth faces each have an excessively small height, thereby failing to sufficiently produce the effect of providing proper backlash. Conversely, if the average particle diameter is greater than the aforementioned range, the minute particles are liable to be separated from the lubricant composition, making it difficult to provide a homogeneous lubricant composition.

In order to flexibly accommodate variations in backlash between the small gear and the large gear combined with each other and to reduce the rattling sound by completely filling the engaging portion of the small gear and the large gear with the residual minute particles unfixed to the resin tooth faces, it is preferred that the minute particles do not have a single particle diameter but have a certain form of particle size distribution. That is, some of the minute particles having relatively great particle diameters bite into the resin tooth faces due to the force inputted by the operation of the speed reduction gear to form the projections, while the other minute particles having relatively small particle diameters are not fixed to the resin tooth faces but fill inter-projection spaces to further reduce the rattling sound.

The shape of each of the minute particles may be selected from various shapes but, in consideration of easy biting of the particles in the resin tooth faces, the shape of each of the projections formed by the biting of the particles or the fluidity of the lubricant composition, it is particularly preferred that the minute particles are spherical or granular. The content of the minute particles is preferably 5 to 50 mass% based on the total of the lubricant composition. If the content is less than the aforementioned range, the minute particles will fail to sufficiently produce the effect of providing proper backlash by the formation of the projections. Conversely, if the content is greater than the aforementioned range, the lubricant composition is liable to have a reduced fluidity, failing to function as a lubricant.

The soft metal particles (3) are present in the engaging portion of the small gear and the large gear at the initial stage of lubrication, and thereafter crushed by engagement between the small gear and the large gear to adhere in the form of films to the metal tooth faces of the gears to provide proper backlash, thereby reducing the noise in the automobile compartment. The soft metal particles may be composed of any of various metals and alloys which are softer than the combined metal tooth faces. Where the tooth faces are composed of iron, steel or the like, for example, specific examples of the soft metal particles include particles of bronze, copper, tin, zinc, silver, gold and aluminum. The soft metal particles may be produced by any of various known methods such as an electrolytic method, a pulverization method, and an atomization method.

The soft metal particles preferably have an average particle diameter of 5 to 150 µm. If the average particle diameter is less than the aforementioned range, it will be difficult to sufficiently produce the effect of providing proper backlash with the soft metal particles being present in the engaging portion of the small gear and the large gear, particularly, at the initial stage of the lubrication. Conversely, if the average particle diameter is greater than 150 µm, the soft metal particles are liable to be separated from the lubricant composition, thereby failing to provide a homogeneous lubricant composition.

The content of the soft metal particles is preferably 5 to 50 mass% based on the total of the lubricant composition. If the content is less than the aforementioned range, it will be difficult to sufficiently produce the effect of providing proper backlash with the soft metal particles being present in the engaging portion of the small gear and the large gear at the initial stage of the lubrication and the effect of providing proper backlash with the soft metal particles thereafter adhering in the form of films on the metal tooth faces. Conversely, if the content is greater than the aforementioned range, the lubricant composition is liable to have a reduced fluidity, failing to function as a lubricant.

A solid lubricant (molybdenum disulfide, graphite, PTFE or the like), a phosphorus or sulfur-based extreme-pressure additive, an antioxidant such as tributylphenol or methylphenol, an antirust agent, a metal inactivating agent, a viscosity index improving agent and/or an oily agent may be added to the lubricant composition of the present invention as required.

### <Speed Reduction Gear and Electric Power Steering Apparatus>

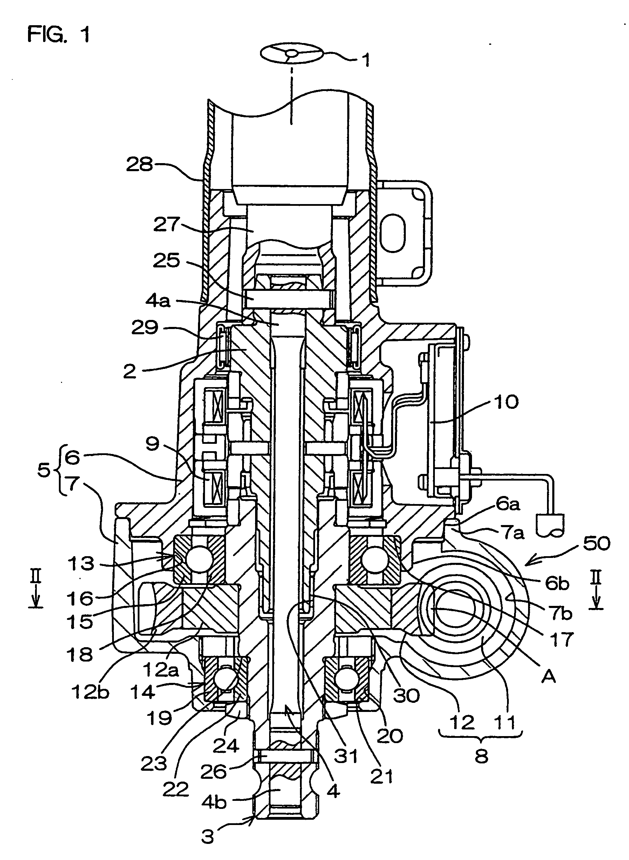

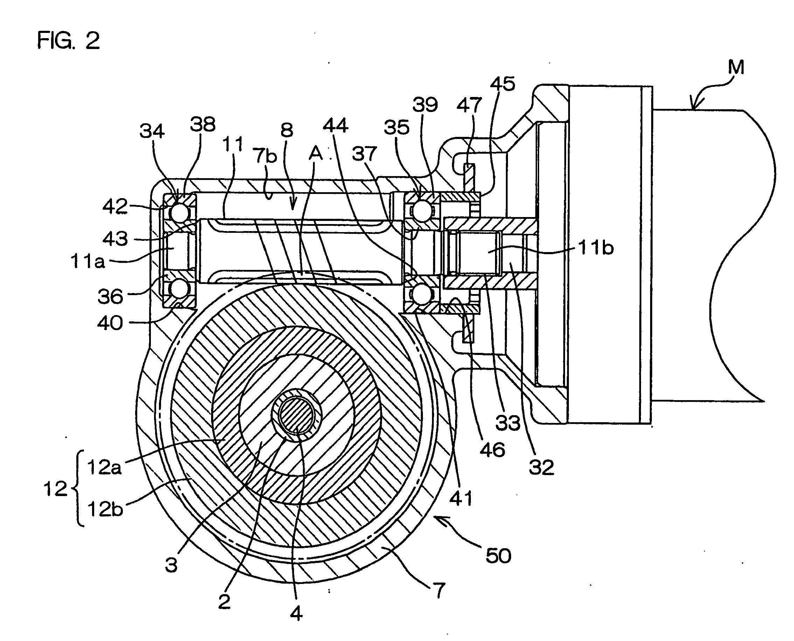

Fig. 1 is a schematic sectional view of an electric power steering apparatus according to one embodiment of the present invention. Fig. 2 is a sectional view taken along a line II-II in Fig. 1. Referring to Fig. 1, in the electric power steering apparatus according to this embodiment, a first steering shaft 2 serving as an input shaft to which a steering wheel 1 is attached and a second steering shaft 3 serving as an output shaft connected to a steering mechanism (not shown) such as a rack-and-pinion mechanism are coaxially connected to each other through a torsion bar 4.

A housing 5 which supports the first and second steering shafts 2 and 3 is composed of an aluminum alloy, for example, and attached to an automobile body (not shown). The housing 5 includes a sensor housing 6 and a gear housing 7 which are fitted to each other. Specifically, the gear housing 7 has a cylindrical shape, and an annular flange 7a at its upper end is fitted in an annular peripheral step 6a at a lower end of the sensor housing 6. The gear housing 7 accommodates a worm gear mechanism 8 serving as a speed reduction gear mechanism, and the sensor housing 6 accommodates a torque sensor 9, a control board 10, and so on. A speed reduction gear 50 is configured by accommodating the worm gear mechanism 8 in the gear housing 7.

The worm gear mechanism 8 includes a worm wheel 12 which is rotatable integrally with an axially intermediate portion of the second steering shaft 3 and is restricted in its axial movement, and a worm shaft 11 (see Fig. 2) which is meshed with the worm wheel 12 and connected to a rotating shaft 32 of an electric motor M through a spline joint 33. The worm wheel 12 includes an annular metal core 12a integrally rotatably coupled to the second steering shaft 3, and a synthetic resin member 12b having teeth provided on its outer peripheral surface as surrounding the metal core 12a. The metal core 12a is inserted in a mold, for example, when the synthetic resin member 12b is molded. The core metal 12a and the synthetic resin member 12b are combined and integrated by molding the synthetic resin member 12b with the metal core 12a inserted. The second steering shaft 3 is rotatably supported by first and second rolling bearings 13 and 14 which are arranged axially of the second steering shaft 3 with the worm wheel 12 vertically interposed therebetween.

An outer ring 15 of the first rolling bearing 13 is fitted in a bearing holding hole 16 provided inside a cylindrical projection 6b at a lower end of the sensor housing 6 and held therein. An upper end surface of the outer ring 15 abuts against an annular step 17, so that axial upward movement of the outer ring 15 relative to the sensor housing 6 is restricted. On the other hand, an inner ring 18 of the first rolling bearing 13 is fitted around the second steering shaft 3 by way of interference fit. A lower end surface of the inner ring 18 abuts against an upper end surface of the metal core 12a of the worm wheel 12.

An outer ring 19 of the second rolling bearing 14 is fitted in a bearing holding hole 20 of the gear housing 7 and is held therein. A lower end surface of the outer ring 19 abuts against an annular step 21, so that axial downward movement of the outer ring 19 relative to the gear housing 7 is restricted. On the other hand, an inner ring 22 of the second rolling bearing 14 is integrally rotatably attached to the second steering shaft 3 and is restricted in its relative axial movement. The inner ring 22 is held between a step 23 of the second steering shaft 3 and a nut 24 tightened around a thread portion of the second steering shaft 3.

The torsion bar 4 extends through the first and second steering shafts 2 and 3. An upper end 4a of the torsion bar 4 is integrally rotatably connected to the first steering shaft 2 by a connection pin 25, and a lower end 4b of the torsion bar 4 is integrally rotatably connected to the second steering shaft 3 by a connection pin 26. A lower end of the second steering shaft 3 is connected to the steering mechanism such as a rack-and-pinion mechanism, as described above, through an intermediate shaft not shown. The connection pin 25 connects a third steering shaft 27 disposed coaxially with the first steering shaft 2 to the first steering shaft 2 in an integrally rotatable manner. The third steering shaft 27 extends through a tube 28 serving as a steering column.

An upper part of the first steering shaft 2 is rotatably supported by the sensor housing 6 via a third rolling bearing 29 such as of a needle roller bearing. A reduced diameter portion 30 of a lower part of the first steering shaft 2 is fitted in a hole 31 of an upper part of the second steering shaft 3 with predetermined play provided in the direction of the rotation, so that relative rotation of the first and second steering shafts 2 and 3 is restricted within a predefined range.

Referring to Fig. 2, the worm shaft 11 is rotatably supported by fourth and fifth rolling bearings 34 and 35 held by the gear housing 7. Inner rings 36 and 37 of the fourth and fifth rolling bearings 34 and 35 are respectively fitted around constricted portions of the worm shaft 11. Outer rings 38 and 39 are respectively held in bearing holding holes 40 and 41 of the gear housing 7. The gear housing 7 includes a portion 7b radially opposed to a part of a peripheral surface of the worm shaft 11.

The outer ring 38 of the fourth rolling bearing 34, which supports one end 11a of the worm shaft 11 is positioned in abutment against a step 42 of the gear housing 7. On the other hand, the inner ring 36 abuts against a positioning step 43 of the worm shaft 11, thereby restricting movement thereof toward the other end 11b. The inner ring 37 of the fifth rolling bearing 35, which supports a portion of the worm shaft 11 adjacent to the other end 11b (an end on the side of the joint) abuts against a positioning step 44 of the worm shaft 11, thereby restricting the movement thereof toward the one end 11a.

The outer ring 39 is urged toward the fourth rolling bearing 34 by a screw member 45 for preload adjustment. The screw member 45 is screwed into a screw hole 46 formed in the gear housing 7, thereby preloading the pair of rolling bearings 34 and 35 and axially positioning the worm shaft 11. A reference numeral 47 denotes a lock nut which is engaged with the screw member 45 in order to fasten the screw member 45 after the preload adjustment.

In the gear housing 7, the lubricant composition of the present invention containing the aforementioned minute particles dispersed therein is filled in a region including at least an engaging portion A of the worm shaft 11 and the worm wheel 12. That is, the lubricant composition may be filled only in the engaging portion A, in the engaging portion A and the entire peripheral portion of the worm shaft 11, or in the entire gear housing 7.

The present invention is not limited to the embodiment shown in Figs. 1 and 2. In the embodiment described above, for example, the metal worm shaft 11 and the worm wheel 12 having teeth provided on an outer peripheral surface of the synthetic resin member 12b are used in combination as described above in order to use the buffer particles (1) or the minute particles (2) as the minute particles. Where the soft metal particles (3) are used, however, a worm wheel 12 entirely composed of a metal may be used in combination with the metal worm shaft 11. The construction of the speed reduction gear according to the present invention is applicable to speed reduction gears for apparatuses other than the electric power steering apparatus, and various modifications may be made within the scope of the present invention defined by the claims.

### EXAMPLES

### <Example 1>

A synthetic hydrocarbon oil (of the PA08 grade having a dynamic viscosity of 48 mm²/ s (at 40°C)) as the lubricant base oil, polyurethane resin particles having an average particle diameter of 150 µm as the buffer particles, and lithium stearate and a calcium sulfonate thickener as the thickener were blended and mixed under application of heat. Then, the resulting mixture was cooled to be gelatinized, and then milled. Thus, a lubricant composition was prepared. Used as the calcium sulfonate thickener was a complex of a petroleum-based sulfonic acid calcium sulfonate with four calcium salts including calcium carbonate, calcium dihydroxystearate, calcium acetate and calcium borate.

The lubricant composition contained 30 mass% of the polyurethane resin particles, 2 mass% of lithium stearate, 5 mass% of the calcium sulfonate thickener, and the balance being the synthetic hydrocarbon oil based on the total of the lubricant composition. The lubricant composition had a worked penetration of 400 (at 25°C) as determined in conformity with the aforementioned measurement method specified in JIS K2220:2003 "Lubricating Grease" by Japanese Industrial Standards.

### <Comparative Example 1>

A lubricant composition was prepared in substantially the same manner as in Example 1, except that no lithium stearate was blended and the content of the synthetic hydrocarbon oil was correspondingly increased. The lubricant composition had a worked penetration of 400 (at 25°C).

### <Evaluation Test>

The lubricant compositions prepared in Example 1 and Comparative Example 1 were each filled in the speed reduction gear 50 of the electric power steering apparatus shown in Figs. 1 and 2. A worm shaft 11 of an iron-based metal and a worm wheel 12 with its synthetic resin member 12b composed of a polyamide resin were used in combination for the worm gear mechanism 8 of the speed reduction gear 50.

While the electric power steering apparatus was operated, the steering wheel 1 connected to the electric power steering apparatus was rotated 540 degrees from a neutral position to the left, then rotated back to the neutral position, then rotated 540 degrees from the neutral position to the right, and rotated back to the neutral position in each cycle. A duration test was performed by continuously repeating this process for 100,000 cycles.

After the duration test, the lubricant compositions were each taken out of the speed reduction gear 50, and the worked penetration of each of the lubricant compositions (at 25°C) was determined. In Comparative Example 1, the worked penetration (at 25°C) was increased to 450, and the oil separation was observed. In Example 1, on the contrary, the worked penetration (at 25°C) was reduced to 385, and the oil separation was not observed. Further, the temperature of the housing 5 of the speed reduction gear 50 was measured after the duration test. In Comparative Example 1, the temperature was increased to 60°C. In Example 1, on the contrary, the temperature was merely increased to 45°C.

## Claims

1. A lubricant composition having a worked penetration of not less than 355 at 25°C comprising a lubricant base oil and a thickener;
wherein the thickener comprises at least two types of thickeners including at least lithium stearate, **characterized in that** a content of lithium stearate is 0.5 mass% to 3 mass% based on the total of the lubricant composition.

2. The lubricant composition according to claim 1,
further comprising minute particles which are to be present in a gear engaging portion to serve for noise reduction and having an average particle diameter of 10 to 200 µm.

3. The lubricant composition according to claim 1, wherein the thickener comprises a calcium sulfonate thickener employed in combination with lithium stearate.

4. The lubricant composition according to claim 3, wherein a content of calcium sulfonate thickener is 0.3 mass% to 10 mass% based on the total of the lubricant composition.

5. A speed reduction gear (50) comprising a small gear (11) and a large gear (12), wherein a region including an engaging portion of the both gears is filled with the lubricant composition of any of claims 1 to 4.

6. An electric power steering apparatus configured to transmit an output of an electric motor (M) for steering assist to a steering mechanism by reducing its speed through the speed reduction gear (50) of claim 4.

## Patentansprüche

1. Schmierstoffzusammensetzung mit einer Walkpenetration von nicht weniger als 355 bei 25°C, wobei die Schmierstoffzusammensetzung ein Schmierstoffbasisöl und ein Verdickungsmittel beinhaltet;
wobei das Verdickungsmittel wenigstens zwei Arten von Verdickungsmitteln einschließlich von wenigstens Lithiumstearat aufweist, **dadurch gekennzeichnet, dass** ein Anteil des Lithiumstearats 0,5 m.-% bis 3 m.-% bezogen auf die Schmierstoffzusammensetzung insgesamt beträgt.

2. Schmierstoffzusammensetzung nach Anspruch 1, ferner mit kleinen Partikeln, die in einem Getriebeeingriffsabschnitt vorhanden sein müssen, um dem Zweck der Rauschreduzierung zu dienen, und die einen mittleren Parkikeldurchmesser von 10 µm bis 200 µm haben.

3. Schmierstoffzusammensetzung nach Anspruch 1, wobei das Verdickungsmittel ein Calciumsulfonat-Verdickungsmittel aufweist, das in Kombination mit Lithiumstearat verwendet wird.

4. Schmierstoffzusammensetzung nach Anspruch 3, wobei ein Anteil des Calciumsulfonat-Verdickungsmittels 0,3 m.-% bis 10 m.-% bezogen auf die Schmierstoffzusammensetzung insgesamt beträgt.

5. Drehzahlverminderungsgetriebe (50) mit einem kleinen Zahnrad (11) und einem großen Zahnrad (12), wobei ein Bereich, der einen Eingriffsabschnitt der beiden Zahnräder beinhaltet, mit der Schmierstoffzusammensetzung nach einem der Ansprüche 1 bis 4 gefüllt ist.

6. Elektrische Servolenkvorrichtung, die dazu ausgebildet ist, einen Ausgang eines elektrischen Motors (M) zum Zwecke einer Lenkunterstützung an einen Lenkmechanismus zu übertragen, indem die Drehzahl des elektrischen Motors mittels des Drehzahlverminderungsgetriebes (50) nach Anspruch 4 vermindert wird.

## Revendications

1. Composition lubrifiante ayant une pénétration travaillée de pas moins de 355 à 25 °C, comprenant une huile à base lubrifiante et un épaississant ;
l'épaississant comprenant au moins deux types d'épaississants incluant au moins du stéarate de lithium, **caractérisée en ce qu'**une teneur en stéarate de lithium est de 0,5 % en masse à 3 % en masse sur la base de la composition lubrifiante totale.

2. Composition lubrifiante selon la revendication 1,
comprenant en outre des particules minuscules qui doivent être présentes dans une partie d'engagement d'engrenage pour servir à la réduction du bruit et qui présentent un diamètre moyen de particules de 10 à 200 µm.

3. Composition lubrifiante selon la revendication 1, dans laquelle l'épaississant comprend un épaississant au sulfonate de calcium utilisé en combinaison avec du stéarate de lithium.

4. Composition lubrifiante selon la revendication 3, dans laquelle une teneur en épaississant au sulfonate de calcium est de 0,3 % en masse à 10 % en masse sur la base de la composition lubrifiante totale.

5. Engrenage réducteur (50) comprenant un petit engrenage (11) et un gros engrenage (12), une région comportant une portion d'engagement des deux engrenages étant remplie de la composition lubrifiante selon l'une quelconque des revendications 1 à 4.

6. Appareil de direction assistée électrique configuré pour transmettre une sortie d'un moteur électrique (M) pour assister la direction d'un mécanisme de direction en réduisant sa vitesse par le biais de l'engrenage réducteur (50) selon la revendication 4.
